# EUROPÄISCHE PATENTSCHRIFT

(11) **EP 3 197 388 B1**
(45) Veröffentlichungstag und Bekanntmachung des Hinweises auf die Patenterteilung: **27.06.2018**
(21) Anmeldenummer: 15767146.2
(22) Anmeldetag: 22.09.2015
(51) Int. Cl.: A61C 13/00, A61K 6/00, A61C 13/277

(54) **VERFAHREN ZUR PRÄPARATION VON DENTALEN TELESKOPKRONEN MIT REFLEKTIERENDEN OBERFLÄCHEN**
METHOD FOR PREPARING DENTAL TELESCOPIC CROWNS HAVING REFLECTIVE SURFACES
PROCÉDÉ DE PRÉPARATION DE COURONNES DENTAIRES TÉLESCOPIQUES POURVUES DE SURFACES RÉFLÉCHISSANTES

(30) Priorität: 23.09.2014 DE 102014013807
(43) Veröffentlichungstag der Anmeldung: 02.08.2017
(73) Patentinhaber: DPH Dental Partner Holding GmbH, 22087 Hamburg (DE)
(72) Erfinder: DEICHMANN, Bernd, 12209 Berlin (DE)
(74) Vertreter: Kossak, Sabine
(86) Internationale Anmeldenummer: PCT/EP2015/071673
(87) Internationale Veröffentlichungsnummer: WO 2016/046175

(56) Entgegenhaltungen:
- EP-A2- 1 505 178
- WO-A1-2011/162965
- US-A- 4 575 805
- US-A1- 2008 090 207
- US-A1- 2013 244 199

## Beschreibung

Die Erfindung betrifft ein Verfahren zur Präparation von Dentalobjekten für die optische Erfassung, umfassend die Schritte Anfertigen eines extraoralen Dentalobjekts, Behandeln des Dentalobjekts mit einem Entspiegelungsspray zur optischen Aufrauhung und Entspiegelung der Oberfläche, Abtasten der Oberflächenstruktur mittels optischer Methoden, Weiterleiten der Oberflächendaten an einen Rechner und Erstellen eines virtuellen dreidimensionalen Modells und Bearbeitung des virtuellen Modells.
Im Bereich der Zahntechnik wird vermehrt die Topologie der Zähne und des Zahnersatzes digital erfasst. Mittels eines 3D-Scanner wird die Oberfläche der zu erfassenden Gegenstände optisch vermessen und die ermittelten Daten digital weiterverarbeitet. Die Daten werden dann im CAD/CAM-Verfahren genutzt um Zahnersatzteile herzustellen. Aufgrund der hohen Tastempfindlichkeit der Zähne ist eine Präzision von wenigen Mikrometern angestrebt.
Die hohe Präzision der Zahnersatzteile ist besonders bei Teleskopkronen, welche auch als teleskopierende Doppelkronen oder Doppelkrone bekannt sind, von Bedeutung. Diese Art von Kronen setzt sich zusammen aus mehreren Teilen, den mindestens zwei Primärelementen und dem Sekundärelement. Die Primärelemente werden auf den Restzahnbestand, den Pfeilerstümpfen aufgeklebt und verbleiben dauerhaft im Mund des Trägers. Das Sekundärelement kann abnehmbar auf die Primärelemente aufgeschoben werden und wird vorzugsweise tagsüber getragen und nachts sowie zum Reinigen entfernt. Bei einer solchen Teleskopkrone ist es besonders wichtig, dass Primär- und Sekundärteil passgenau auf einander sitzen. Die Haftreibung zwischen den Teilen muss groß genug sein, um ein versehentliches Abrutschen zu vermeiden, die Gleitreibung aber so gering, dass ein zusätzliches Gleitmittel zum Entfernen des Sekundärteils nicht verwendet werden muss.
Bisher ist es üblich die Teile der Teleskopkrone mittels Gusstechnik herzustellen. Mittels Gußverfahren hergestellte Teleskopkronen sind mit der gewünschten Präzision extrem schwierig herzustellen und liefern meist nicht die benötigte Präzision. Die ineinander greifenden Flächen der Primärteile und des Sekundärteils können mit diesem Verfahren nicht in einer Glätte von wenigen Mikrometern hergestellt werden. Die mikroskopische Rauigkeit führt zu Verspannungen der Teleskopkronenteile.

Bei der optischen Erfassung von Dentalobjekten weisen die zu scannenden Gegenstände eine optisch glatte Fläche oder Teilflächen auf. Beim optischen Scannen dieser Gegenstände wird der Lichtstrahl spekular reflektiert, d.h. der Winkel des ausfallenden Strahls ist bezüglich der Flächennormalen gleich dem des einfallenden Strahls. Der Nachteil hiervon ist, dass die Detektion des reflektierten Strahls nur in diesem einen Winkel stattfinden kann. Zur Lösung dieses Problems ist es üblich, die Oberfläche des Gegenstands durch Beschichtung mit einem Pulver optisch aufzurauen. Der Strahl wird durch die vielen Streuzentren diffus reflektiert, sodass im gesamten Raum der reflektierte Strahl detektiert werden kann. Die Größe der Pulverpartikel sollte eine halben Wellenlänge des verwendeten Lichts nicht überschreiten, um spekulare Reflektionen an den Partikeln selbst zu vermeiden.

Aus dem Stand der Technik sind verschiedene Methoden zur Aufbringung eines mattierenden Pulvers bekannt, das Spiegelungen reduziert und ein besseres Scanergebnis ermöglicht. Die DE 10 2005 016 728 A1 nennt flüssige Materialien mit Metalloxidpulvern, die auf die Oberfläche des Objektes aufgepinselt werden, sowie Antireflexmittel, die aus der Sprühdose auf das Objekt aufgetragen werden.

Zumeist erfolgt die Beschichtung der Gegenstände mit einem mattierenden Pulver mittels einer Sprühdose. Der Druck mit dem der Pulverstrahl aus der Sprühdose austritt ist abhängig von dem Füllstand der Dose und dem Öffnungsgrad des Ventils, welches manuell betätigt wird. Die Beschichtung wird dadurch ungleichmäßig. Stellenweise ist die Beschichtung erheblich dicker als gewünscht, so sind beispielsweise Auftragdicken von lokal 75µm - 90 µm durchaus üblich bei einer angestrebten Beschichtung von durchschnittlich 45µm. Wenn ein so beschichtetes Modell abgetastet wird, werden stellenweise entsprechend falsche Daten gemessen. Auch wenn die Beschichtung aufgepinselt wird, ist es schwierig einen gleichmäßigen Auftrag des Pulvers auf die Oberfläche des Modells zu erzielen. Die Beschichtung mit herkömmlichen Mitteln ändert entsprechend die Topologie der Oberfläche beim Abtasten und es kann zu fehlerhaften Messungen kommen. Hierdurch wird die Qualität des angefertigten Dentalobjekts ggf. deutlich beeinträchtigt.

US 2008/090207 A1 offenbart ein Verfahren zur Präparation von Dentalobjekten mit den Merkmalen des Oberbegriffs des Anspruchs 1. Besonders wichtig ist die Präzision der Abmessungen bei Teleskopkronen. Die Primärteile und das Sekundärteil müssen passgenau aufeinander sitzen können um ohne zusätzliche Klebemittel gleichermaßen fest und lösbar zu sein. Wo eine solche Präzision gefordert ist, müssen die Oberflächen Topologien möglichst genau aufgezeichnet werden. Schon eine aufgetragene Schicht von 90 µm kann zu Verfälschungen der Abmessungen führen und zu einem schlecht sitzenden Sekundärteil. Aufgabe der vorliegenden Erfindung ist es, ein Verfahren bereitzustellen, welches die Oberfläche des zu scannenden Objekts optisch aufraut ohne die Oberflächentopologie merklich zu ändern und eine möglichst gleichmäßige Auftragung eines mattierenden Pulvers erlaubt. Insbesondere ist es die Aufgabe der Erfindung ein Verfahren zur Herstellung der Bestandteile von Teleskopkronen, welche auch als teleskopierende Doppelkronen oder Doppelkrone bekannt sind bereitzustellen.
Die Aufgabe wird erfindungsgemäß gelöst, durch ein Verfahren zur Präparation von Dentalobjekten für die optische Erfassung, umfassend die Schritte
a) Anfertigen eines extraoralen Dentalobjekts,
b) Besprühen des Dentalobjekts mit einem Entspiegelungsspray zur optischen Aufrauhung und Entspiegelung der Oberfläche,
c) Abtasten der Oberflächenstruktur mittels optischer Methoden,
d) Weiterleiten der Oberflächendaten an einen Rechner und Erstellen eines virtuellen dreidimensionalen Modells des Dentalobjekts und
e) Bearbeitung des virtuellen Modells und ggf. Weiterverwendung der Bearbeiteten Daten im CAD/CAM-Verfahren,
dadurch gekennzeichnet, dass das Besprühen des Modells in Schritt b) mittels einer Airbrushvorrichtung, bevorzugt einer Airbrushpistole, erfolgt und dass es sich bei dem Dentalobjekt um eine Teleskopkrone handelt.

Weitere Ausführungsformen sind Gegenstand der Unteransprüche oder nachfolgend beschrieben.
Teleskopkronen, werden auch als teleskopierende Doppelkronen oder Doppelkronen bezeichnet.
Zur Erstellung eines Dentalobjekts ist es notwendig zunächst ein Modell des Zahns, Kiefers oder Werkstücks anzufertigen, an das die Teleskopkrone aufgesetzt wird. Diese Dentalobjekte werden teilweise aus Gips, aber in zunehmendem Masse aus Kunststoff und/oder Metall gefertigt. Nach der Anfertigung des Dentalobjekts wird dieses dann digital erfasst. Um das Dentalobjekt optimal erfassen zu können, werden die glänzenden Oberflächen mit einen Entspiegelungsspray (Scanspray) mattiert, das mit einer Airbrushpistole aufgetragen wird. Das so mattierte Dentalobjekt wird dann mittels optischer Methoden z.B. mit einem Laser oder mit einem Streifenlichtscanner abgetastet . Das Dentalobjekt wird dabei mittels einer Belichtungsquelle, mit Licht einer definierten Wellenlänge bestrahlt z.B. einer LED mit einer Wellenlänge von 365 nm. Über das Dentalobjekt wird z.B. dabei ein Koordinatensystem mit x- , y- und z- Koordinaten und einem definierten Raster gelegt. Die Messung erfolgt während sich die Belichtungsquelle in x-, y- und z- Richtung in definierten Abständen entlang des Rasters über das Objekt bewegt. Ein Detektor fängt die reflektierte Strahlung auf und gibt diese zur Auswertung an einen Rechner weiter. Mittels der aufgefangenen Daten wird ein virtuelles dreidimensionales Modell erstellt.
Das erfindungsgemäße Verfahren ermöglicht es, das Sekundärteil einer Teleskopkrone durch ein gängiges Fräsverfahren reproduzierbar herzustellen. Das Fräsverfahren erreicht eine sehr viel höhere Glätte, als es mit dem Gussverfahren möglich ist.
Bei dem erfindungsgemäßen Verfahren wird die Airbrushvorrichtung bevorzugt mit einem Druck zwischen 1 bar und 3,5bar, besonders bevorzugt mit einem Druck von 1 bis 2 bar betrieben. Die besten Ergebnisse werden mit einem Druck von ca. 1 bar erzielt. Bei einem höheren Druck als 3,5 bar wird der Pulverauftrag auf dem Dentalobjekt stärker. Die Lösung trocknet nicht schnell genug auf dem Dentalobjekt und läuft an dem Gegenstand herunter.

Bei dem erfindungsgemäßen Verfahren wird die Airbrushvorrichtung, bevorzugt die Airbrushpistole, mit einer Düse von 0,15 mm bis 0,3 mm, bevorzugt 0,2mm bis 0,3mm, besonders bevorzugt von 0,2mm Durchmesser betrieben. Mit einer Düse von 0,2mm wird das Spray besonders fein zerstäubt, was das Auftragungsergebnis positiv beeinflusst.

Beim erfindungsgemäßen Verfahren wird das Dentalobjekt bevorzugt mit einem Entspiegelungsspray besprüht, das Titandioxidpartikel und mindestens eine leichtflüchtige organische Flüssigkeit, bevorzugt Isopropanol, Ethanol, Aceton, Butylacetat oder eine Mischung hiervon, besonders bevorzugt Isopropanol, enthält. Der Vorteil in der Verwendung von leichtflüchtigen organischen Flüssigkeiten, insbesondere Isopropanol, als Lösungsmittel ist, dass es sich aufgrund des niedrigen Siedepunkts und einer kleinen Verdunstungszahl (gemessen nach DIN 153 170) schnell verflüchtigt. Der behandelte Gegenstand ist schnell trocken und kann gescannt werden. Bei den herkömmlichen Scansprays muss der Gegenstand, insbesondere auf Grund der größeren Schichtdicken, wesentlich länger trocknen, bevor er gescannt werden kann. Dieses führt zu einer Zeitersparnis bei der Herstellung des virtuellen, dreidimensionalen Modells.

Das beim erfindungsgemäßen Verfahren verwendete Entspiegelungsspray weist bevorzugt ein Mischungsverhältnis zwischen Titandioxid und Lösungsmittel von 1:3 bis 1:10, besonders bevorzugt 1:8, auf. Bei einem zu hohen Lösungsmittelanteil werden nicht ausreichend Titandioxidpartikel zur Mattierung auf die Oberfläche des Dentalobjekts aufgebracht. Durch den hohen flüssigen Anteil würde das Objekt zudem langsamer trocknen und es bestünde die Gefahr, dass das Entspiegelungsspray im noch nassen Zustand am Objekt hinab läuft und sogenannte Nasen bildet. Bei einem zu geringem Lösungsmittelanteil drohen die Partikel zu klumpen und lassen sich nicht gleichmäßig auftragen.

In einer Ausführung werden 1% bis 2% der Titandioxid-Partikel durch Eisenoxid-Partikel ersetzt. Das Eisenoxidpulver färbt das Entspiegelungsspray ein und es wird ein noch besserer Kontrast auf den Objekten erzielt. Für den Anwender sind die bereits besprühten Flächen erkenntlich, was den Beschichtungsprozess erleichtert. Bevorzugt werden Eisenoxidpartikel in der Farbe Ocker verwendet.

Die Größe der Titandioxid-Partikel (mittlerer Partikeldurchmesser) im verwendeten Entspiegelungsspray beträgt bevorzugt durchschnittlich 0,2 µm bis 0,3 µm, bevorzugt 0,25µm. 3D-Scanner werden üblicherweise mit Laser oder Dioden im sichtbaren Bereich von 500nm-700nm betrieben, die 0,25µm großen Partikel entsprechen demnach ca. einer halben Wellenlänge, was zu einer optimal diffusen Streuung führt.

Das erfindungsgemäße Verfahren wird zum Entspiegeln des Dentalobjekts für Teleskopkronen, welche auch als teleskopierende Doppelkronen oder Doppelkrone bekannt sind, verwendet. Dabei werden alle glänzenden Oberflächen von z.B. Metallen, Keramik, Titan, Zirkon, Kunststoff und Abdruckmaterialien entspiegelt.

Durch die Verwendung einer Airbrushvorrichtung, insbesondere einer Airbrushpistole, kann beim erfindungsgemäßen Verfahren ein feiner und gleichmäßiger Pulverstrahl erzeugt werden, sodass eine sehr viel dünnere Beschichtung erreicht werden kann. Überraschenderweise konnten Beschichtungen mit einer Schichtdicke von im Mittel 10µm erreicht werden. Hierdurch wird die Topologie der Oberfläche nahezu nicht beeinträchtigt und es ist ein besonders gutes Scanergebnis möglich. Zudem wird gegenüber herkömmlichen Verfahren Material eingespart, dass nicht auf die Oberfläche aufgetragen werden braucht. Anders als bei einer herkömmlichen Sprühdose ist bei einer Airbrushvorrichtung der Strahl zudem unabhängig von dem Winkel in dem die Dose, bzw. die Pistole gehalten wird. Auch dieses ermöglicht einen gleichmäßigeren Auftrag auf die Oberfläche. Ein weiterer Vorteil gegenüber Sprühdosen ist, dass die Airbrushvorrichtung über einen langen Zeitraum eingesetzt werden, so dass zusätzlich Einweg-Verpackungen in Form der Spraydosen eingespart werden. Die Airbrushvorrichtung kann nach dem Gebrauch mit Alkohol gereinigt und beim nächsten Gebrauch neu gefüllt werden. Durch den gleichbleibenden Druck und den feinen Strahl lässt sich das Material extrem fein auf dem Objekt verteilen und die Schichtdicke beim Auftragen wesentlich besser steuern als bei herkömmlichen Verfahren. Es ist bei der Beschichtung mit der Airbrushvorrichtung völlig ausreichend, wenn das Objekt leicht beschichtet ist, wenn keine glänzende Fläche mehr zu sehen ist.

Verschiedene Tests anhand von genormten Prüfkörpern haben gezeigt, dass der Pulverauftrag bei dem erfindungsgemäßen Verfahren unter 10 µm liegt. Bei anderen herkömmlichen Sprays aus der Sprühdose lag der Pulverauftrag an einigen Stellen bei über 75 µm - 90 µm

### Beispiel

Es wurde ein Entspiegelungsspray im Mischungsverhältnis 1:8 angemischt. Dabei wurde 1 Teil Titandioxidpulver mit einer Partikelgröße von 0,25 µm in eine Flasche gefüllt und 8 Teile Isopropanol 99,9% hinzugegeben. Die Gebrauchsfertige Lösung wurde in den Kelch der Airbrushpistole mit einer Düse von 0,2 mm eingefüllt und in einem Abstand von 10-15cm gleichmäßig auf dem Objekt verteilt, hierzu wurde der Airbrushhebel leicht nach hinten gezogen.

Danach wurde das Objekt wie gewohnt mit dem 3D Scanner eingescannt. Nach dem Gebrauch wurde die Airbrushpistole mit Alkohol gefüllt und mit diesem leer gesprüht.

Bei dem Betrieb der Airbrushpistole mit 1 bar konnte eine Titandioxidbeschichtung von unter 10µm Dicke erzielt werden.

## Patentansprüche

1. Verfahren zur Präparation von Dentalobjekten für die optische Erfassung, umfassend die Schritte
a) Anfertigen eines extraoralen Dentalobjekts,
b) Besprühen des Dentalobjekts mit einem Entspiegelungsspray zur optischen Aufrauhung und Entspiegelung der Oberfläche, wobei das Besprühen des Modells mittels einer Airbrushvorrichtung erfolgt,
c) Abtasten der Oberflächenstruktur mittels optischer Methoden
d) Weiterleiten der Oberflächendaten an einen Rechner und Erstellen eines virtuellen dreidimensionalen Modells des Dentalobjekts,
e) Bearbeitung des virtuellen Modells und Weiterverwendung der bearbeiteten Daten im CAD/CAM-Verfahren,
**dadurch gekennzeichnet, dass** es sich bei dem Dentalobjekt um eine Teleskopkrone handelt.

2. Verfahren gemäß Anspruch 1, **dadurch gekennzeichnet, dass** die Airbrushvorrichtung mit einem Druck von 1 - 3,5 bar, bevorzugt 1 bis 2 bar, betrieben wird.

3. Verfahren gemäß Anspruch 1 oder 2, **dadurch gekennzeichnet, dass** die Airbrushvorrichtung mit einer Düse von 0,15mm bis 0,3mm, bevorzugt 0,2mm bis 0,3mm betrieben wird.

4. Verfahren gemäß einem der Ansprüche 1 bis 3, **dadurch gekennzeichnet, dass** die Airbrushvorrichtung eine Airbrushpistole ist.

5. Verfahren gemäß einem der vorhergehenden Ansprüche, **dadurch gekennzeichnet, dass** das Dentalobjekt mit einem Spray besprüht wird, das Titandioxidpartikel und mindestens eine leichtflüchtige organische Flüssigkeit, bevorzugt Isopropanol, Ethanol, Aceton, Butylacetat oder eine Mischung hiervon, enthält.

6. Verfahren gemäß Anspruch 5, **dadurch gekennzeichnet, dass** das Spray ein Mischungsverhältnis von Lösungsmittel zu Titandioxid von 10:1 bis 3:1, bevorzugt 8:1, aufweist.

7. Verfahren gemäß Anspruch 1, **dadurch gekennzeichnet, dass** das Entspiegelungsspray Titandioxidpartikel und mindestens eine leicht-flüchtige organische Flüssigkeit enthält und bei dem Spray zwischen 1% und 2% des Titandioxid-Anteils durch Eisenoxidpartikel ersetzt sind.

8. Verfahren gemäß einem der Ansprüche 5 bis 7, **dadurch gekennzeichnet, dass** die Titandioxidpartikel eine durchschnittliche Größe von 0,2 µm bis 0,3 µm, bevorzugt 0,25 µm haben.

## Claims

1. A method used to prepare dental objects for optical imaging comprising the following steps:
a) manufacturing an extraoral dental object,
b) spraying the dental object with an anti-reflective dental spray to optically roughen and reduce the reflectivity of the surface, whereby the model is sprayed by means of an airbrush device,
c) scanning the surface structure by means of optical methods,
d) transmitting the surface data to a computer and creating a three-dimensional virtual model of the dental object,
e) processing the virtual model and further using the processed data in CAD/CAM procedures,
**characterized in that** the dental object relates to a telescopic crown.

2. The method according to claim 1, **characterized in that** the airbrush device is operated at a pressure of 1 - 3.5 bar, preferably 1 to 2 bar.

3. The method according to claim 1 or 2, **characterized in that** the airbrush device is operated using a nozzle from 0.15 mm to 0.3 mm, preferably 0.2 mm to 0.3 mm.

4. The method according to claims 1 to 3, **characterized in that** the airbrush device is an airbrush pistol.

5. The method according to any of the preceding claims, **characterized in that** the dental object is sprayed with a spray containing titanium dioxide particles and at least one low-volatility organic liquid, preferably isopropanol, ethanol, acetone, butyl acetate, or a mixture thereof.

6. The method according to claim 5, **characterized in that** the spray has a mixing ratio between solvent and titanium dioxide of from 10:1 to 3:1, preferably 8:1.

7. The method according to claim 1, **characterized in that** the anti-reflective spray contains titanium dioxide particles and at least one low-volatility organic liquid, and between 1% and 2% of the titanium dioxide portion of the spray is substituted with iron oxide particles.

8. The method according to any of claims 5 to 7, **characterized in that** the titanium dioxide particles have an average size of 0.2 µm to 0.3 µm, preferably 0.25 µm.

## Revendications

1. Procédé de préparation d'objets dentaires en vue de la détection optique, comprenant les étapes suivantes :
a) réalisation d'un objet dentaire extra-oral,
b) pulvérisation de l'objet dentaire avec un aérosol antireflet, en vue de donner à la surface un aspect optiquement rugueux et antireflet, la pulvérisation du modèle étant réalisée au moyen d'un dispositif aérographe,
c) exploration de la structure de surface à l'aide de méthodes optiques,
d) transmission des données de surface à un calculateur et réalisation d'un modèle virtuel tridimensionnel de l'objet dentaire,
e) traitement du modèle virtuel et utilisation des données traitées, dans un procédé CFAO,
**caractérisé en ce que** l'objet dentaire est une couronne télescopique.

2. Procédé selon la revendication 1, **caractérisé en ce que** le dispositif aérographe fonctionne avec une pression de 1 à 3,5 bars, de préférence de 1 à 2 bars.

3. Procédé selon la revendication 1 ou 2, **caractérisé en ce que** le dispositif aérographe fonctionne avec une buse de 0,15 mm à 0,3 mm, de préférence de 0,2 mm à 0,3 mm.

4. Procédé selon une des revendications 1 à 3, **caractérisé en ce que** le dispositif aérographe est un pistolet aérographe.

5. Procédé selon une des revendications précédentes, **caractérisé en ce que** l'objet dentaire est pulvérisé avec un aérosol qui contient des particules de dioxyde de titane et au moins un liquide organique volatil, de préférence de l'isopropanol, de l'éthanol, de l'acétone, de l'acétate de butyle ou un mélange.

6. Procédé selon la revendication 5, **caractérisé en ce que** l'aérosol présente un rapport de mélange entre le solvant et le dioxyde de titane qui va de 10:1 à 3:1 et est de préférence de 8:1.

7. Procédé selon la revendication 1, **caractérisé en ce que** l'aérosol antireflet contient des particules de dioxyde de titane et au moins un liquide organique volatil, et que dans l'aérosol, de 1 % à 2 % de la proportion de dioxyde de titane sont remplacés par des particules d'oxyde de fer.

8. Procédé selon une des revendications 5 à 7, **caractérisé en ce que** les particules de dioxyde de titane ont une taille moyenne de 0,2 µm à 0,3 µm, de préférence de 0,25 µm.
